# EUROPEAN PATENT SPECIFICATION

(11) **EP 3 188 848 B1**
(45) Date of publication and mention of the grant of the patent: **14.07.2021**
(21) Application number: 15837316.7
(22) Date of filing: 08.09.2015
(51) Int. Cl.: B05D 7/00, C09D 4/00, C09D 5/03

(54) **ROUGH TACTILE RADIATION CURABLE COATING**
RAUE STRAHLUNGSHÄRTBARE BERÜHRUNGSBESCHICHTUNG
REVÊTEMENT TACTILE RUGUEUX DURCISSABLE PAR RAYONNEMENT

(30) Priority: 05.09.2014 US 201414478201
(43) Date of publication of application: 12.07.2017
(73) Proprietor: Actega North America, Inc., Delran, NJ 08075 (US)
(72) Inventor: LIN, Anshyang, Delran, New Jersey 08075 (US); WITTIG, James, Delran, New Jersey 08075 (US)
(74) Representative: Hamm&Wittkopp Patentanwälte PartmbB
(86) International application number: PCT/US2015/048947
(87) International publication number: WO 2016/037185

(56) References cited:
- WO-A1-00/24946
- WO-A1-2006/112909
- WO-A2-2005/017048
- GB-A- 1 492 332
- US-A- 3 935 365
- US-A- 5 014 468
- US-A- 5 833 724
- US-A- 6 077 601
- US-A1- 2006 143 991
- US-A1- 2006 288 905
- US-A1- 2011 049 865
- None

## Description

### FIELD OF THE INVENTION

The present invention according to the appended claims relates to radiation curable compositions that form tactile or relief structures with enhanced roughness on various substrates and a method of fabrication particularly well suited for high volume production. Illustrative uses for such coatings include alternative Braille printing on security documents, anti-counterfeit print elements, and raised text and graphics.

### BACKGROUND OF THE INVENTION

A tactile structure with information embedded in the relief structure that is perceptible by touch is important and has numerous uses. For example, conventional Braille is a writing system for visually impaired or sightless people, consisting of groups of raised elements such as bumps that are read by touch, allowing a vision impaired person to read written text. Other tactile marking such as deep intaglio patterns and non-intaglio-deep embossment are also of use for security marking of documents such as banknotes, checks, credit cards, passports and the like. Tactile information in a more complex form than simple tactile dots and marks, including graphics and pictures, can also be used for copy protection where it can be readily discerned by touch but not easily copied. Tactile effects are often used to impart visual effects that prevent or deter tampering, counterfeiting and the like.

In order to be effective and acceptable for use as a security feature for a document, or as a Braille writing for the visually impaired, tactile structures have to be sufficiently durable and resistant to abrasion and generate an effective and distinguishable touch sensation over the full tactile/relief structure at the lowest possible relief thickness. They should maintain the tactile effect throughout the full use cycle and at the same time able to be produced at a high printing speed.

Conventional Braille printers include a mechanism for embossing Braille elements into relatively thick paper. Unfortunately, Braille printers may be relatively expensive to manufacture, cumbersome for use, and the thick paper intended to hold the Braille elements can be difficult to obtain. Intaglio printing, such as set forth in EP1525993A1, US7357077B2 and US7618066B2, disclose printed surfaces with tactile features prepared by an intaglio process contrasting visually in terms of brightness by varying ink thicknesses. Such intaglio printing relief structures have low relief thickness and can lose the tactile feature after certain use cycles and therefore are not sufficiently durable and are not suitable for Braille text.

US2005/0115425A1 also discloses a data carrier printed by an intaglio process exhibiting a tactile feature. It further recites that images printed by rotogravure have no tactile feature due to a lack of viscosity of the inks used and low contact pressure during the printing process, preventing relief information. US 2003/0150148A1, US7,090907B2 and CA2489899A1 describe adhesive coated labels with tactile feel, where at least one layer of clear tactile coating is selectively applied to discrete surface areas of face stock to create the raised portions on the label while adhesive is applied on a second surface. No details are given on the coating, its thickness or that the label can be used as a security device.

WO2010071993A1, EP2379653B1 and US2011/0250410A1 disclose methods and compositions for printing tactile marks and security documents by screen printing or ink jet printing UV curable deposits with 2000 to 25000 cP viscosity at 25°C. The disclosed compositions, which may further comprise a taggant so as increase the level of security, are said to have high adhesion due to the presence of a low viscosity acrylate, 2-30% acid acrylate and 1-10% of a rheological adsorbing additive (like fumed silica and precipitated gel silica) among other ingredients. The recited production speed of 1000-7300 sheets an hour is slow compared to offset print and flexo printing and is thus not particularly good for high volume production. WO2010/071956A1 and WO2010/071992A1 disclose methods of printing tactile marks comprising a step of screen printing a deposit of UV-curable inks and a step of intaglio calendering or printing into the applied inks so as to form protrusions in the substrate on the side opposite the ink deposit.

WO2013185950A1 teaches methods for printing tactile security features on a substrate by employing a radiation curable basecoat and a radiation curable topcoat where the surface energy of the basecoat is at least 15 mN/m less than the topcoat. Other than identification of very generic radiation curable compositions, there is no specificity on how the tactile effect is accomplished. WO2010044846A1 discloses a security device having one or more relief structures with durable and compression-resistant tactile markings. The durable tactile marking material is a thermoplastic or thermoset polyurethane or urethane UV curable system and has at least a 50 Durometer (Shore 00) hardness, at least a 100 Durometer (Shore A) hardness and a Young's Modulus of 0.3-13.8 megapascals. While durable marking can be made, the use of thermoplastic and thermoset materials requires special setup and high thermal energy, the UV curable system being applied through special cast and cure embossing. The relief structure has a thickness of less than 250 microns, and there is no surface roughness or texture or finger touch enhancement mentioned.

US2004/0054030 presents photo-curable printing inks having 8 to 75 Pa.s at a shear rate of 5 sec⁻¹ and 3-25 Pa.s at shear rate of 20 sec⁻¹ with a thixotropic index of 1.5-3.5, comprising 3-8 parts of inorganic fine particles with a mean particle size of 0.1 micron. The inks are deposited by a special printer/dispenser to produce Braille text of 0.2 mm thickness. The specified rheological behavior allows for obtaining shape/high thickness suitable for Braille elements. However, the tactile feature is based only on the high thickness deposited and the dispenser device shown is similar to an ink jet type device and is not suitable for high volume, high speed production. WO2006051484A2 discloses the use of a printer device for printing tactile information for Braille and other security documents. It utilizes a radiation curable material with an addressable curing area (masking technique) and heat to facilitate polymerization-induced diffusion creating the relief structure. No pigments, filler or particles are mentioned. An anti-counterfeit soft feel coating with color effect is disclosed in CA2575160A1, where the focus is on the color effect composition with at least one of layer or a multiple layer construction provides the soft feel tactile effect without interfering with other layers; the color effect may be a matrix of a metal oxide or a semiconductor in a non-UV curable polymer binder. US 5,779,482 and EP 0667244B1 teach the use of both regular printing and 3-dimensional transparent ink printing together on the same articles of 300-500 um in height, which is significantly higher than conventional 100 micron Braille. The added thickness may create problems in stacking the sheets varying heights throughout individual sheets in high volume production.

There are also known alternative ways to generate tactile effects, which may or may not be appropriate for security devices. For example, inkjet printing can be used to print tactile features. EP 1676715A1 discloses inkjet methods for creating tactile features which may contains dyes or pigments for visual and automated inspection. US 6,644,763B1 discloses a method for printing raised and special effects by using an inkjet to deposit a light curable photo-polymer materials with adjustable volume. It discusses the inkjet method but provides no details on photo-curable materials to be used. US 2009/0155483A1 discloses a small home/office tactile printing system utilizing a UV curable glue. WO2010 149476A1 discloses printed security elements comprising a first region having a first color and at least a second region having a second color, where both regions are differentially covered and, in particular by a inkjet printing process, covered with a transparent or translucent material to form a raised tactile element. WO1996023661A1 and US5627578 teach the generation of raised lettering and graphics by inkjet printing the wet inks onto specific areas on a substrate and subsequently dusting thermographic powder thereon; the extra powder is removed. The substrate is heated to 270-300° F to cause the adhered powder and ink to rise.

US7,755,659 B2 and US5,240,335 both teach a Braille printing apparatus using a laser printer with either an increased amount of toner or a coarser grain toner to generate a higher volume deposit. US2010/0055415A1 discloses a UV curable gellant inks for tactile print applications with an inkjet device. The system and method create authentication marks of tactilely perceptive marks having a height of at least 31 microns on a recording medium. The ultraviolet curable phase changing inks include a reactive wax, a gellant, a radiation curable monomer or prepolymer, and a photo-initiator. The tactile perceptive effect is based only on height and not the roughness of the tactile surface. DE 202004015355U1 discloses a Braille text production method in which a chemical coating with an additive (microcapsules) that gives rise to local heating from a laser beam creating a significant increase in coating volume.

Another method of imparting a tactile effect is by modifying the substrate itself as in EP 0687771A2 using a nip roller. Re-registration and the need to change the roller whenever the design changes limit its use. Alternatively, several systems include the use of particles to impart a tactile effect. DE102006012329A1 discloses inks for flexo and offset printing comprising heat- and infrared expandable microspheres. US2010/0002303A1 describes a security device with at least one zone having an interference effect and at least one tactile recognition element in the same regions. The tactile elements comprise particles sticking out of the zone having interference effects. It further mentioned that spherical, pyramidal, ovoid or polyhedral sharp particles including glass beads, polyurethane beads, metal silica and wax create the tactile relief. No radiation curable binder is disclosed. US2010/0219626A1 discloses a security sheet including iridescent security marks comprising iridescent pigments and which may also contain a tactile element constituting polyurethane (especially PU microspheres or PU in an aqueous dispersion). US 6,740,373B1 describes a system comprising a base coat and topcoat with tactile and insulating features intended to enhance the "feel" of containers, which contains a texturing and or insulating agent consisting of microspheres, gases, glass beads and their mixture in a water based heat hardenable binder system. US 2011/0049865A1 discloses a security feature having an inherent tactile nature comprising a printed layer with particles with protrusion greater than at least 10 microns and at least 3 particles per 3 mm². The particles are selected from a group consists of alumina, silica, Zirconia, silicon carbide, silicon nitride, boron carbide, zeolite, alundum, and polymer particles and that these particles are preferably spherical. It is also disclosed that any techniques including screen, lithography, letter press, flexo, gravure, intaglio printing can be used and the security feature can be both human and machine readable. However, addition of the disclosed type of particles to inks will reduce color strength and also can create streaking during the printing process with particles larger than 20 microns, especially in flexo, gravure and intaglio printing processes.

US2011/0000802A1 discloses a packaging for consumer goods having a discontinued tactile coating. The raised features have a height of at least 10 microns and a spacing of at least 20 microns, applied by gravure, offset, lithographic or screen printing onto the outer packages. The tactile composition is to be cured in an inert gas atmosphere which can be costly to operate. In a similar consumer packaging, US8,283,008B2 discloses a container with tactile surface with at least one surface with a high coefficient of friction of between 0.63 and 2 and at least one surface with a low coefficient of friction of less than 0.5. The high friction area is formed by a coating comprising fiber accounting for 10-30% of the total weight.

Alternatively, some systems provide the texturing effects to the surface. WO2006028518A2 describes UV curable compositions and methods for the creation of abrasion resistant surfaces incorporating inorganic fillers 1 to 1000 nm (0.01 to 1 microns) is size, and specifically colloidal silica. An abrasion resistant property to the cure coating composition is imparted but without any tactile feature. WO2003029373A2 discloses a low viscosity (100 to 70,000 centipoises at a shear rate of 0.15 s⁻¹) scratch resistant radiation curable coating using texturizing and inorganic fillers. The texture producing particles include aluminum, aluminum derivatives, aluminum coated silica, thermosetting or thermal plastic polymers, copolymers, wax, microspheres, and beads and combinations with a 50% diameter of 10-150 microns. The inorganic filler includes aluminum oxide, silicon oxide, ceramic spheres and mixtures thereof with a 50% diameter of 3 to 9 microns and is the key contributor to scratch resistance. The focus of the composition is on visual texturing patterns with scratch resistance as used in flooring application and not specifically for tactile receptive recognition. US 6,790,512B2 teaches a radiation or thermally cured coating having an inherent macroscopic texture. The composition comprises texture producing nylon particles with an average particle size of about 60 microns at 1-15% loading, and secondary particles with a particle size smaller than that of the texture particles. Again, this application simply offers a surface texture for its visual effect.

US 2005/0009943A1 is likewise directed to the formation of a desired macroscopic texture and process in which the viscosity of the formulation is 100,000 to 1,000,000 cps at shear rate of 0.15s⁻¹, a rheological control additive being used to achieve the effective viscosity. Small inorganic particles similar texture producing particles are used. US2012/0177884A1 discloses a transparent texture coating in which particles of similar reflective index to that of the water based radiation curable binder of the formulation are exposed and protrude out of the binder surface after the water is evaporated. The particle dimension is larger than the dried film thickness, thus creating the textured surface. Extra energy is needed to evaporate the water and it is difficult to adequately dry a thick film product to the presence of the water. US2014/0024748A1 discloses a radiation curable coating composition using polyhydroxyalkanoates as an additive to give matting, scratch resistance and a soft feel tactile effect. The feel deteriorates over time and is also affected by use and by dirt.

There are also mechanical means to impart tactile, texture or relief structures to a surface by the use of coatings. CA2692566C describes a method of making a macroscopically expanded, 3-dimensional apertured polymeric web by using a fluid jet to product hair-like fibrils. The effect is a soft and silky tactile impression. The required fluid jet flow is not sufficiently addressable for the precise images required by security devices. US2011/0117292A1 discloses a method for transferring a textured pattern on to a B-stage radiation curable coating to create a desired pattern. US2013/0177716A1 discloses a method for creating texture by using a doctor blade with openings to generate the textured surface. The pattern created is coarse and is only good for large areas and not to form a Braille or security document. WO2013081385 utilizes an embossing roller to impart a 3-dimensional pattern onto a UV curable coating. A new roller has to be generated for each desired design.

Additionally, glitter particles have been used in paints, inks, coatings, and adhesive for decorative purposes or the enhancement of visual stimulation to providing sparking effects to the applied-to articles. There are several methods for the application of the particles. US2009/0075100A1 discloses a method to achieve a higher level glitter and metallic look (metallic tone glitter) paint film by applying a first base metallic paint, a second base glitter paint containing scale-like pigments (including glitter particles) and aluminum pigment, a clear paint followed by baking and hardening. This application is for decorative purposes. US 6,048,422 describes a method for applying glitter and the like to non-planar surfaces and 3- dimensional articles. A multi-step process described promotes an even distribution of glitter particles while providing a uniform texture and appearance. A pneumatic spray is used to dust the glitter particles onto the article and selectively applied adhesives. The extra glitter is then vibrated and rotated off the article. A wiping air spray is applied before applying a passivating overcoat. This multi-step process creates glitter dusts and not suitable for high speed print process. US 6,599,567 B2 discloses the application of glitter to cylindrical articles by forcing the articles through a pot of clear lacquer, metering the applied lacquer coating to a desired thickness and then immediately passing the articles through a pot of glitter. The articles then pass through a vacuum to remove excess glitter for reuse. Such a multi-step process creates glitter dust and is difficult to incorporate into a printing press.

Further coating compositions based on particles/flakes and binders of different nature are illustrated in US 2011/049865 A1, US 2006/143991 A1, US 3 935 365 A, GB 1 492 332 A, US 5 014 468 A, WO 00/24946 A1, WO 2005/017048 A2 and US 6 077 601 A.

As described above, solutions have been developed to produce tactile or relief structures applicable for security documents, however, these suffer from drawbacks that have been mentioned. There remains a need for compositions and methods to produce tactile or relief marks with enhanced roughness to improve the tactile recognition by the vision impaired, to reduce the tactile coating consumption with a lower coating thickness, to manufacture security documents at normal high production line speeds with standard printing methods without the need for added devices, and to have the ability to incorporate one or more machine readable feature substances such as luminescent compounds, infrared-absorbing compounds, cholesteric liquid crystals, magnetic compounds and mixtures thereof.

### BRIEF SUMMARY OF THE INVENTION

It has been discovered that high aspect ratio polymeric and inorganic flakes or platelets with a scale-like platelet shape, stiffness, and toughness, when used as a component part of a coating composition, and especially radiation curable compositions, provide a desired degree of durable enhanced surface roughness to the cured compositions. The aspect ratio of a flake is defined as the ratio of the flakes longest face dimension, ***L***, to the thickness, T. Flake shapes of high aspect ratio also allow these flakes, as a randomly-dispersed constituent of a coating composition, to pass through coating metering mechanisms such as doctor blades and rollers used in standard flexo, gravure or roller coating/printing stations and then regain a desired random distribution and orientation, including orientations protruding outwardly from the coating surface to yield the desired tactile feel. Conventional spherical, semi-spherical, quasi-spherical inorganic or organic powders, waxes, fillers, and beads of similar sizes will create streak marks on the substrates and can be left behind or removed by the same metering mechanisms that allow passage of the high aspect ratio platelet shapes, thus losing the tactile effectiveness of compositions incorporating those shaped particles. The present invention relates to a coating composition comprising
- a plurality of high aspect ratio flakes with an aspect ratio (L/T) from 2 to 31 and
- a radiation-curable binder
   suitable for creating a rough tactile structure on a substrate, whereby the tactile-structure is characterized by
- including upwardly-projecting elements with their longest dimension L being larger than the applied thickness of the binder on the substrate and
- having a surface roughness with a relief structure over 12 microns in height.

The incorporation of the high aspect ratio flake of the present invention into a coating composition enables the creation of tactile or relief structures with extreme roughness on a substrate, such as alternative Braille printing on security documents (such as banknotes, checks, credit cards, passport, and the like), anti-counterfeiting print elements on security documents, raised text and graphics for authentication and rough tactile feels in commercial printing. Further, the invention provides a printable or coatable radiation curable (including ultraviolet light (UV), ultraviolet light emitting diode (UV-LED) and electron beam (EB) curable) material for printing such tactile/relief structures onto a substrate in a predetermined pattern.

Such tactile/relief structures are printed or coated onto a substrate in a predetermined pattern using a radiation curable composition preferably comprising (a) a plurality of high aspect ratio flakes; (b) a radiation-curable binder; (c) one or more optional machine readable feature substances such as luminescent compounds, infrared-absorbing compounds, cholesteric liquid crystals, magnetic compounds and mixture thereof; and (d) optional matting agent(s) to control the final gloss level while not affecting the desired rough tactile perceptive feature.

The high aspect ratio flakes comprise 5% to 50% by weight of the radiation curable composition. The flakes can be clear, translucent, metallic or colored, and preferably clear or translucent. The flakes further can have a thickness T from 10 to 75 microns; a longest face dimension, L, from 25 to 400 microns, ; and an aspect ratio (***L*/*T***) from 2 to 31. The longest dimension, L, should preferably be larger than the applied thickness of the binder to facilitate protrusion of the flakes above the binder surface to create the desired roughness. The high aspect ratio flakes can be made from a wide variety of polymeric films as well as from a variety of inorganic materials, including but not limited to mica, clay (aluminum silicates), and talc where a high aspect ratio is often inherent. High aspect ratio flakes made from polymeric film can be precision cut into any appropriate face shape including but not limited to square, rectangle, hexagon, polygon, circle, diamond, and star shapes.

The radiation-curable binder can be EB curable, UV curable, or UV-LED curable.

The viscosity of the radiation curable composition for creating the rough tactile/relief structure is preferably in the range of 200 to 5000 centipoises (cps) measured with a Brookfield Viscometer model LV using an appropriate spindle for the device (#2, #3, or #4 spindle depending on the viscosity) and at an appropriate spindle speed (10 to 100 rpm) at 25°C.

The radiation curable composition can preferably be applied through a flexographic (flexo) press, a gravure press, a lithographic press using a flexo coater at the end of the press, a roller coater, or a screen press with the proper selection of the anilox, gravure cylinder or mesh size as known in the printing art in accordance with the desired coating thickness and particle type. The radiation curable coating compositions are capable of being applied at normal production speeds of the above mentioned presses.

The applied cured radiation curable rough tactile/relief structures have good hand tactile perception and recognition features, durability and rub resistance, as well as improved detergent resistance to survive machine laundering suitable for use in Braille alternative printing and as security markings, anti-counterfeit print elements, raised text and graphics, capable of high speed and high volume fabrication of the same.

### BRIEF DESCRIPTION OF THE DRAWINGS

Fig. 1 is a schematic diagram depicting the orientation of rough tactile/relief structures printed or coated onto a substrate in association with desired non-tactile graphics in a predetermined pattern;
Figs. 2A, 2B, and 2C illustrate the dimensional nomenclature for a high aspect ratio flake of rectangular, hexagonal, and star shape, respectively;
Fig. 3 illustrates other possible face shapes for high aspect ratio flakes suitable for the current invention;
Fig. 4 is a diagrammatical cross-sectional representation of a typical anilox or gravure metering system;
Fig. 5A is a photomicrograph and plot illustrating the topographical contour and the cross-sectional protrusion thickness of a coating of the current invention using the high aspect ratio flakes;
Fig. 5B is a photomicrograph and plot of the topographical contour and the cross-sectional protrusion thickness of a coating incorporating large spherical particles (applied possible only by screen printing and not flexo printing methods); and
Fig. 5C is a plot of the topographical contour and the cross-sectional protrusion thickness of a typical UV matte coating using small spherical particles applied at a typical low coat thickness.

### DETAILED DESCRIPTION OF THE INVENTION

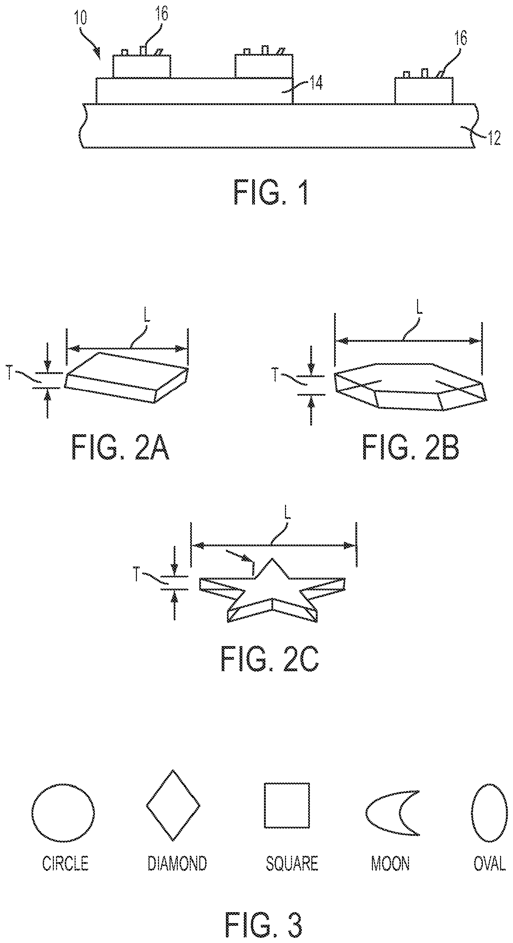

As used herein, a flake is defined as a scale-like flake or platelet (such as illustrated in Figs. 2A, 2B and 2C) having a 2-dimensional face with a longest dimension or distance, ***L*** between face edges and a flake thickness, ***T,*** being the flake's shortest dimension. The aspect ratio of a flake is defined as the ratio between the longest face dimension (***L***) and the thickness **(*T*)**.

Surface roughness of a coating is defined as a measure of the overall height and amount of the protrusion of relief structures above the overall flat surface of the coating. A rough tactile surface is defined as a surface roughness with relief structures over 12 microns in height. Such tactile surfaces have a surface roughness to increase the hand tactile recognition. As shown in Fig. 1, a rough tactile coating 10 may be applied either directly to a substrate 12, or may be applied over an ink layer 14 to provide a tactile feel to the image or printing created by the ink layer. The tactile coating 10 includes upwardly-projecting elements 16, such as the high aspect ratio flakes of the present invention embedded a radiation curable binder, to create the desired roughness.

In accordance with the invention, tactile/relief structures are printed or coated onto a substrate in a predetermined pattern using a radiation curable composition comprising (a) a plurality of high aspect ratio flakes; (b) a radiation-curable binder; (c) one or more optional machine readable feature substances such as luminescent compounds, infrared-absorbing compounds, cholesteric liquid crystals, magnetic compounds and mixture thereof; and (d) optional matting agent(s) to control the final gloss level while not affecting the desired rough tactile perceptive feature.

When used as part of a coating composition, the high aspect ratio flakes, especially in radiation curable compositions, provide a desired degree of enhanced surface roughness to the cured compositions. The high aspect ratio flakes comprise 5% to 50% by weight of the radiation curable composition, preferably at 10% to 40% by weight, and more preferably at 15% to 30% by weight. The high aspect ratio flakes further can be clear, translucent, metallic or colored, and preferably clear or translucent; the flakes further can have a thickness T from 10 to 75 microns and more preferably 12 to 50 microns; a longest face dimension L from 25 to 400 microns, more preferably from 50 to 150 microns; and an aspect ratio (L/T) from 2 to 31 and more preferably from 2 to 15. The longest dimension L also should be larger than the applied thickness of the binder on the substrate to facilitate the flakes protruding above the overall smoother binder surface to create the desired surface roughness.

The high aspect ratio flakes can further be made from polymeric films such as polyethylene terephthalate polyester, polyvinyl chloride, polycarbonate, cellulose acetate, Poly(lactic acid), polypropylene, high density polyethylene, polystyrene, nylon, polyacrylonitrile, and the like. The film surface can further be decorated with metalized aluminum, or colorants or coatings or combination thereof. As depicted in Fig. 3, the flakes can be any of a variety of face shapes, including circular, square, oval, and star. High aspect ratio flakes made from polymeric films can be precision cut into any face shape, including but not limited to square, rectangle, hexagon, polygon, circle, diamond, and star.

Exemplary flakes of polymeric film nature include but not limited to commercial available materials from Meadowbrook Inventions, Inc., under the names Clear Poly, Alpha jewels, Cosmetic Jewels, Crystalina Jewels, Electric Jewels, Micronic Jewels, Plastic Jewels, Polyester Jewel and Polyester Pearl; from American Glitters Inc. under the trade names Starmist (polyester based films), Pevenex (Polyvinyl chloride based films) and Alunex (aluminum based films) and other sources. Inorganic flakes are available from LKAB Minerals under the product names of Phlogopite mica PD and PW and Muscovit mica MD2800, MD1700, and MD1400, among others. Suitable clay flakes includes products from Imerys under a variety of tradenames including Glomax (LL), and Hydrite (Flat D, PXN, R); from KaMin LLC under the trade names of Covergloss and Hydragloss, among others; and talc flakes from R.T. Vanderbilt Co. under the f Vantalc and Nytalc trade names.

The radiation-curable binder can be EB curable, UV curable, or UV-LED curable. An EB curable binder may comprise an acrylate oligomer; an acrylate monomer; optionally at least one additive such as a wetting agent, defoamer, slip agent, stabilizer, dispersant, optical brightener, pigment dispersion, and/or dye; and optionally one or more non-radiation crosslinkable inert resins dissolvable in the acrylate monomer and/or oligomer. A UV or UV-LED curable binder may comprise an acrylate oligomer; an acrylate monomer; a photo-initiator or mixture of initiators; a cure accelerator; optionally at least one additive such as a wetting agent, defoamer, slip agent, stabilizer, dispersant, optical brightener, pigment dispersion, and/or dye; and optionally one or more non-radiation crosslinkable inert resins dissolvable in the acrylate monomer and/or oligomer. The present invention is applicable over a wide range of formulations as known by those skilled in the art of formulating radiation curable binders to target viscosity and desired cured film properties.

Additives such as wetting agents, defoamers, slip agents, stabilizers, optical brighteners, pigment dispersions, and/or dyes can be added up to about 10 wt% of the radiation curable composition as known in the art. In addition to such additives, one or more optional machine- readable feature substances, such as luminescent compounds, infrared-absorbing compounds, cholesteric liquid crystals, magnetic compounds and mixture thereof may also be incorporated into the coating.

An optional matting agent may also be included to control the final gloss level of the coating while not affecting the desired rough tactile perceptive feature. Examples of matting agents include, but are not limited to, compatible polyethylene waxes, polypropylene waxes, polytetrafluroethylene waxes, Fischer-Trosch waxes, carnauba waxes, nylon waxes, fume silicas, polymer beads, and combinations thereof.

The viscosity of the radiation curable composition for creating the inventive rough tactile /relief structure is in the range of 200 to 5000 centipoises (cps) measured with a Brookfield Viscometer model LV using an appropriate spindle for the device (#2, #3, or #4 spindle depending on the viscosity) and at appropriate spindle speed (10 to 100 rpm) at 25°C, preferably in the range of 500 to 4000 cps and more preferably in the range of 1000 to 3500 cps. The flakes are added to the composition during blending; no special conditions need to be observed other than sufficient blending to insure a complete random distribution of the flakes throughout the composition.

The radiation curable composition can be applied through a flexographic (flexo) press, a gravure press, a lithographic press using a flexo coater at the end of the press, a roller coater, or a screen press with the proper selection of the anilox, gravure cylinder or mesh size as known in the printing art in accordance with the desired coating thickness and particle type employed. The radiation curable coating compositions are capable of being applied at normal production speeds of the above mentioned presses.

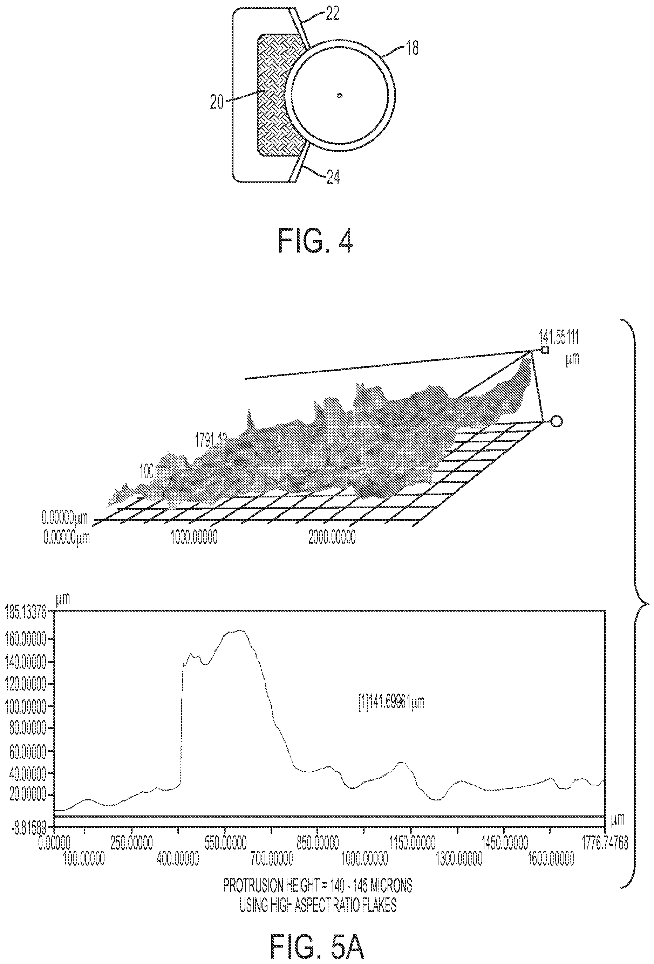

The unique features of the high aspect ratio flakes for the current invention include their toughness, flexibility, durability, chemical resistance and their ability to move through tight gaps and spaces along with the rest of the coating composition during a printing process without compromising the desired tactile effect. Such small gaps and spaces are especially prevalent in coating metering mechanisms incorporating elements such as anilox cells, gravure cells, doctor blades and rollers as used in standard flexo, gravure or roller coating/printing stations. Fig. 4 is a simplified representation of a typical modern flexographic and gravure coating or printing apparatus utilizing a chambered doctor blade and the engraved anilox or gravure roll. The coating to be ultimately applied to a substrate is in chamber 20 which is fitted against anilox or gravure roller 18 having a matrix of cells that are laid out in an overall pattern corresponding to the image desired for the coating to be applied. The chamber is sealed against the roller on one side by a doctor blade 22 and on the other side either by a second doctor blade or a containment blade 24 to prevent leakage of the coating from the chamber. The coating is typically pumped into the chamber from an enclosed ink or coating sump. The doctor blade 22 skims excess coating from the surface of the anilox or gravure roll as it exits the chamber to ensure that the coating remaining on the anilox roller is confined to the cells. The coating in the cells is then transferred to a plate cylinder (not shown), which in turn transfers the coating to the substrate in a flexo application or is transferred directly onto the substrate in a gravure application. Other printing technologies may use structures analogous to doctor blades to skim excel coating material from anilox or like elements.

Because the largest dimension of tactile particles should be greater that the applied thickness of the coating to provide for a sufficient percentage of the particles extending outwardly from the coating upon application to the substrate and cure, such particles necessarily project outwardly from the roller cells and thus potentially interfere with doctor blade action. The randomly-distributed high aspect ratio flakes in the present inventive coating composition that may project outwardly from the coating are not removed from but rather displaced within the coating by the doctor blade or like gap or space-defining elements, allowing them to pass along with the rest of the coating composition past the blades and/or through the gaps or spaces, regaining a random orientation. As the cell contents are transferred either to a transfer plate or the substrate, the coating is "split", with only a portion of the contents being transferred. It is believed that with the splitting many of the flakes are caused to align in a more upright manner, again extending or protruding outwardly from the coating. The curing of the coating holds the flakes in place.

Such passage is to be contrasted with the incorporation of spherical or semi-spherical in a coating composition. Conventional spherical or semi-spherical tactile particles with a diameter comparable to the longest face dimension of the high aspect ratio flakes of the present invention projecting outwardly from the coating are screened or filtered out in large amount behind the doctor blade and are not able to be delivered proportionally as formulated into the cells of the anilox or gravure roller as part of the coating for transfer. The coating thus loses the intended tactile effectiveness.

### Examples

The following parameters are applicable to the examples presented herein:

Gloss - Gloss was measured at 60 degrees with a BYK micro-Tri-gloss Gloss Meter in accordance with ASTM D523, ASTM D2457, DIN 67530 or JIS Z8741 with a unit of gloss unit. (G.U.)

Viscosity - Viscosity was measured with a Brookfield Viscometer model LV with appropriate spindle and rpm at 25°C or specified temperature per manufacturer instructions.

Hand feel roughness rating: Tactile hand feel roughness and recognition rating was conducted by 3 individuals giving rating from 0-5, 0 being smooth feel with little or no tactile feel, while 5 being the roughest tactile feel.

Surface profile: 3 dimensional surface contour and 2-dimensional cross-sectional protrusion profiles were generated using Keyence Digital microscopy model VHX-5000.

Curing: For UV curing, the coated sheets were cured with a Labcure^{tm} lab UV curing unit from Miltec with a HPI UV lamp at 300 watt per liner inch and 100 mJ/cm². For EB curing, the coated sheets were cured with a lab EB curing unit from Advance Electron Beam, Inc. at 3 Mrad, 50 feet per min, and less than 100 ppm of oxygen.

The components for the radiation curable binder compositions are shown in Table 1. These radiation curable binders were prepared by mixing the first five components to dissolve the solid components and homogenizing with a saw-tooth mixing blade in a stainless steel container. After the solids were completely dissolved, the remaining components were then added and mixed until uniform.

**Table 1 - Compositions for the radiation curable binders used**

| | | **Binder #1 (UV)** | **Binder #2 (UV)** | **Binder #3 (EB)** |
|---|---|---|---|---|
| **Category** | **Component** | **Weight %** | | |
| Acrylate Monomer | Isobonyl acrylate (Sartomer) | 46.14 | 44.33 | 56.24 |
| Initiator #1 | Benzophenone (IGM Resin) | 1.87 | 2.15 | - |
| Initiator #2 | Mixture of 2-hydroxy-2-methyl-1-phenyl-1-propanone and diphenyl (2,4,6-trimethylbenzoyl)-phosphine oxide (BASF/Ciba) | 2.53 | 2.91 | -- |
| Acrylate Oligomer | Ebecryl 284 (Allnex) | 38.53 | 38.03 | 42.38 |
| Additive - fluorescent | Unitex OB (BASF/Ciba) | 0.27 | 0.31 | 0.31 |
| Additive - Defoamer | Foamblast 550 (Emeral performance Materials) | 0.93 | 1.07 | 1.07 |
| Cure accelerator | 2-Propenoic acid, 2-ethyl-2-(((1-oxo-2-propenyl)oxy)methyl)-1,3-propanediyl ester (ACETEGA Kelstar) | 9.73 | 11.20 | -- |
| | **Total** | 100.00 | 100.00 | 100.00 |

### Example A - Ultraviolet (UV) Curable Composition with High Aspect Ratio Flake

The components of the UV curable composition for Example A containing high aspect ratio flakes are listed in Table 2. It was prepared by adding high aspect ratio flakes Clear Poly 0.004"x0.004"x0.001"x Hexagon (of hexagonal face with longest dimension **L=** 100 microns and thickness **T=** 25 microns, into UV binder #1 and blending with a saw-tooth mixing blade in a stainless steel container until uniform. The viscosity of the coating was about 1340 mPa·sec or centipoise (measured using a Brookfield Viscometer, model LV using #3 spindle at 60 rpm) at 25° C. Sample A was applied on BYK opacity charts (coated 1 side paper from BYK-Garner USA) with a lab flexo hand proofer unit (from Cavanagh Corporation) using a 45Quad-60.4 BCM cell volume Pamarco anilox roller (toll reference # 65) to simulate a flexo coater; and with American M&M lab screen printing press Model S-912 using a 110 screen mesh. The coated sheets were cured with a Labcure^{tm} lab UV curing unit from Miltec with a HPI UV lamp at 300 watt per liner inch and 100 mJ/cm².

**Table 2 - Compositions of Sample A and Comparative Samples 1 & 2**

| | | **Sample A** | **Comparative Sample 1** | **Comparative Sample 2** |
|---|---|---|---|---|
| **Category** | **Component** | **Weight %** | | |
| Radiation Curable Binder (UV) | Binder #1 | 75.00 | 75.00 | 75.00 |
| High aspect ratio flakes | Clear Poly (0.004x0.004x0.001, Hexagon) (Meadowbrook Inventions, Inc) | 25.00 | -- | -- |
| Large spherical particles | Texture 5384W (110 microns average partice size) (Shamrock Technologies) | -- | 25.00 | -- |
| Small spherical particles | Propyltex 270S (20 microns average particle size) (Micro Powders, Inc.) | -- | -- | 25.00 |
| | **Total** | 100.00 | 100.00 | 100.00 |
| | **Brookfield Viscosity, cps** | 1340 | 2100 | 6300 |

### Comparative Sample 1- UV Curable Composition with Large Spherical Particles.

The components of the UV curable composition for Comparative Sample 1 containing large spherical particles are likewise as listed in Table 2. It was prepared by adding large spherical particle size wax, Texture 5384W (average particle size of 110 microns high molecular weight polyethylene wax from Shamrock Technologies) into UV binder #1 and blending with a saw-tooth mixing blade in a stainless steel container until uniform. The viscosity of the coating was coating was about 2100 mPa·sec or centipoise (measured using a Brookfield Viscometer, model LV using #3 spindle at 30 rpm) at 25° C. Comparative sample 1 was applied on BYK opacity charts (clay coated one side, CIS, paper from BYK-Garner USA) with a lab flexo hand proofer unit (from Cavanagh Corporation) using a 45Quad-60.4 BCM cell volume Pamarco anilox roller (toll reference # 65) to simulate a flexo coater ; and with an American M&M lab screen printing press Model S-912 using a 110 screen mesh. The coated sheets were cured with a Labcure^{tm} lab UV curing unit from Miltecwith a HPI UV lamp at 300 watt per liner inch and 100 mJ/cm².

### Comparative Sample 2- UV Curable Composition with Small Spherical Particles

The components of UV curable composition for Comparative Sample 2 containing small spherical particles are also listed in Table 2. It was prepared by adding small spherical particle size wax, Propyltex 270S (average particle size of 20 microns polypropylene wax from Micro Powders, Inc.), into UV binder #1 with a saw-tooth mixing blade in a stainless steel container until uniform. The viscosity of the coating was about 6300 mPa·sec or centipoise (measured using Brookfield Viscometer, model LV using #3 spindle at 30 rpm) at 25 degree Centigrade and was about 1680 mPa·sec or centipoise at 50 degree Centigrade using #3 spindle at 60 rpm. Comparative sample 2 was applied on BYK opacity charts (coated 1 side paper from BYK-Garner USA) at 50° C with a lab flexo hand proofer unit (from Cavanagh Corporation) using a 45Quad-60.4 BCM cell volume Pamarco anilox roller (toll reference # 65) to simulate a flexo coater; and with American M&M lab screen printing press Model S-912 using 110 screen mesh. The coated sheets were cured with a lab UV curing unit from Miltec model Labcure with HPI UV lamp at 300 watt per liner inch and 100 mJ/cm².

Table 3 presents a comparison of the printed and cured radiation curable compositions made from the compositions of Example A and Comparative Samples 1 and 2 using both screen printing and flexo application techniques. With screen printing, the coating composition flows through the screen mesh to create a coating thickness determined by the thickness of the screen mesh and the emulsion applied and the included particles will protrude from the surface layer only if the diameter of the particles is greater than the coating thickness. As can be seen from Table 3, sample A and Comparative Sample 1 demonstrate a tactile surface roughness, while Comparative Sample 2 with a smaller 20 microns average particle diameter shows a relatively smooth surface which is also reflected by the 60 degree gloss level. Sample A has slightly better hand feel surface roughness than that of Comparative Sample 1 and is much rougher than that of Comparative Sample 2. The 60 degree gloss level of a surface is generally a measure of surface smoothness by measuring reflecting light at a 60 degree incident angle; the lower the gloss, the rougher the surface. In the case of screen printing applications, the lower gloss level coincides with the roughness, i.e., Sample A is rougher than Comparative Sample 1 and Comparative Sample 2 is relatively smooth and the least rough.

**Table 3 - Tactile Surface Evaluation**

| **Application Method** | **Surface Description** | **Sample A** | **Comparative Sample 1** | **Comparative Sample 2** |
|---|---|---|---|---|
| **Silk Screen** | **Appearance** | Rough tactile surface & reflective bottom layer | Rough tactile surface & less reflective bottom layer | Smooth & Glossy |
| | **60 deg. Gloss (G.U.)** | 11-20 | 14-24 | 52-57 |
| | **Hand Feel Roughness Rating*** | 3-4 | 3 | 0 |
| **Anilox Hand Proofer** | **Appearance** | Very rough tactile surface and shiny reflective bottom layer, ***No streaking observed*** | Rough tactile surface and less reflective bottom layer; ***many streaking bands*** | Tactile surface with ***streak marks.*** |
| | **60 deg. Gloss (G.U.)** | 14-18 | 11 - 17 | 9-20 |
| | **Hand Feel Roughness Rating*** | 5 | 3-4 | 1 |

The lower half of Table 3 demonstrates the results using a flexo hand proofer with a 45Quad-60.4 BCM cell volume Pamarco anilox roller. The transfer of coating composition through the anilox cells makes the final surface profiles/contours very different from those obtained from the screen printing method with the same coating. Sample A (high aspect ratio flakes) in this case shows the most tactile roughness with a rating of 5 and without any streaking marks on the print; while Comparative Sample 1 (110 microns average diameter spherical particles) has a tactile roughness rating of 3-4, similar to its screen printed counterpart sample, with many streaking marks; and Comparative Sample 2 has the least tactile roughness (rating of 1) with some streak marks as well. The streak marks from Comparative Sample 1 and 2 are the expected results of the metering action of the anilox application method when there are larger spherical particles present (larger than present anilox cells can handle) in the coating composition. Sample A, on the other hand, does not generate any streak marks with the same anilox set up indicating clear passage of the flakes.

### Sample B- UV Curable Composition with High Aspect Ratio Flakes and Optional Matting Particles

The components of the UV curable composition for Sample B containing small spherical particles are listed in Table 4. It was prepared by adding high aspect ratio flakes and two optional smaller spherical matting agents, Propyltex 270S (Average particle size of 20 microns polypropylene wax from Micro Powders, Inc.), and Propyltex 325S (Average particle size of 13 microns polypropylene wax from Micro Powders, Inc.) into UV binder #2 and blending with a saw-tooth mixing blade in a stainless steel container until uniform. The viscosity of the coating was about 2660 mPa·sec or centipoise (measured using Brookfield Viscometer, model LV using #3 spindle at 30 rpm) at 25° C. Sample B was applied on BYK opacity charts (coated 1 side paper from BYK-Garner USA) with a lab flexo hand proofer unit (from Cavanagh Corporation) using a 45Quad-60.4 BCM cell volume Pamarco anilox roller (toll reference # 65) to simulate a flexo coater. The coated sheets were cured with a lab UV curing unit from Miltec model Labcure with HPI UV lamp at 300 watt per liner inch and 100 mJ/cm².

### Sample C: EB Curable Composition with High Aspect Ratio Flakes and Optional Matting Particles

The components of the EB curable composition for Sample C containing small spherical particles are also listed in Table 4. It was prepared by adding high aspect ratio flakes and two optional smaller spherical matting agents, Propyltex 270S (Average particle size of 20 microns polypropylene wax from Micro Powders, Inc.), and Propyltex 325S (Average particle size of 13 microns polypropylene wax from Micro Powders, Inc.) into EB binder #3 and blending with a saw-tooth mixing blade in a stainless steel container until uniform. The viscosity of the coating was about 2880 mPa·sec or centipoise (measured using Brookfield Viscometer, model LV using #3 spindle at 30 rpm) at 25° C. Sample C was applied on BYK opacity charts (coated 1 side paper from BYK-Garner USA) with lab flexo hand proofer unit (from Cavanagh Corporation) using 45Quad-60.4 BCM cell volume Pamarco anilox roller (toll reference # 65) to simulate a flexo coater. The coated sheets were cured with a lab EB curing unit from Advance Electron Beam, Inc. at 3 Mrad, 50 feet per min, and less than 100 ppm of oxygen.

**Table 4 - Compositions of Samples B & C**

| | | **Sample B** | **Sample C** |
|---|---|---|---|
| **Category** | **Component** | **Weight %** | |
| Radiation Curable Binder (UV) | Binder #2 | 65.20 | |
| Radiation Curable Binder (EB) | Binder #3 | | 65.20 |
| High aspect ratio flakes | Clear Poly (0.004" 0.004"x.001") (Meadowbrook Invention, Inc) | 25.00 | 25.00 |
| Matting agent #1 - Spherical | Propyltex 270S (20 microns average particle size) (Micro Powders, Inc.) | 5.00 | 5.00 |
| Matting agent #2 - Spherical | Propyltex 325S (13 microns average particle size) (Micro Powders, Inc.) | 4.80 | 4.80 |
| | **Total** | 100.00 | 100.00 |
| | **Brookfield Viscosity, cps** | 2600 | 2880 |

**Table 5 - Tactile Surface Evaluation for Sample B& C**

| **Application Method** | **Surface Description** | **Sample B** | **Sample C** |
|---|---|---|---|
| **Anilox Hand Proofer** | **Appearance** | Very rough tactile surface, **low reflective** bottom layer, **No *streaking.*** | Very rough tactile surface, **low reflective** bottom layer, ***No streaking.*** |
| | **60 deg. Gloss (G.U.)** | 6-8 | 8-12 |
| | **Hand Feel Roughness Rating*** | 5 | 5 |

Table 5 shows the tactile surface results for sample B (UV curable) and sample C (EB curable) which include the use of two optional spherical matting agents, Propyltex 270S (20 microns average particle size) and Propyltex 325S (13 microns average particle size) from Micro Powders, Inc., in addition to the high aspect ratio flakes. Only an anilox application using the same anilox roller (45Quad-60.4 BCM cell volume) was conducted for these 2 samples. The tactile hand feel roughness of Samples B and C retain the rating of 5 like Sample A, except that the gloss is lower and the visual light reflection of the overall surface is also much lower. The optional matting agents lower the overall gloss and surface light reflectance while maintaining the surface roughness and even coverage without streak marks.

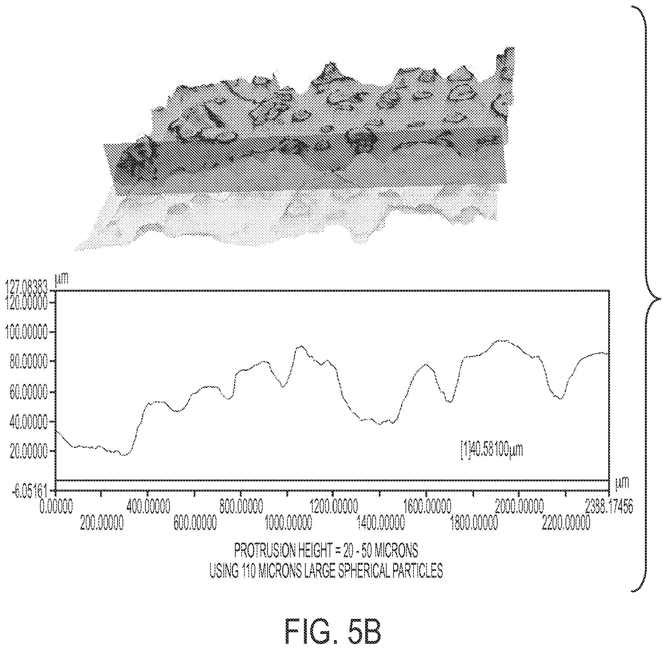

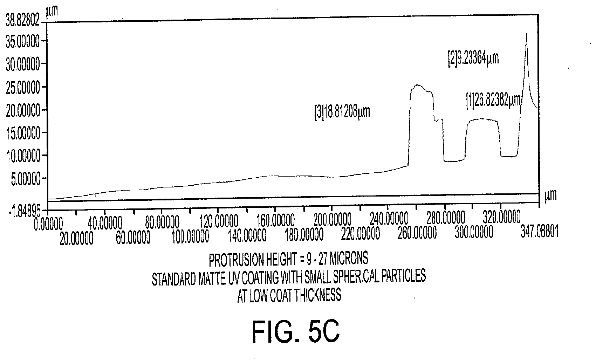

To further illustrate the tactile surface roughness and thickness profile, a digital microscope is used to characterize the surface contour. Fig. 5A shows the surface profile of Sample B (containing high aspect ratio flakes and optional matting agents) using an anilox application method with a hand feel roughness rating of 5. A protrusion height of 140-150 microns is observed. Fig. 5B illustrates a hand feel roughness of 3 from Comparative Sample 1 (containing large spherical particles) applied using screen printing. A protrusion height of 20-50 microns is measured. Fig. 5C shows the surface profile of a commercially available UV curable matte coating, Ultra Sheen UV-9782A from ACTEGA Kelstar, Inc., commercially printed using a flexo coater at the end of an offset printing press on a book cover with a 10.5 BCM and Quad anilox roller. The 60 degree gloss level of the printed sheet is measured at 4 to 5 G.U., with a very low light reflectance and a hand feel roughness rating of 1. A protrusion height of 9-27 microns is measured. The above profile comparisons demonstrate surface roughness rating of 5, 3, and 1 which reflect the differences in the protrusion heights (140-145 microns vs. 20-50 microns vs. 9-27 microns). An extreme roughness for hand feel recognition is achieved with radiation curable compositions using high aspect ratio flakes.

Many modifications and variations of this invention can be made without departing from its spirit and scope, as will be apparent to those skilled in the art. The specific embodiments described herein are offered by way of example only, and the invention is to be limited only by the terms of the appended claims, along with the full scope of equivalents to which such claims are entitled.

## Claims

1. A coating composition comprising
- a plurality of high aspect ratio flakes with an aspect ratio (L/T) from 2 to 31 and
- a radiation-curable binder
suitable for creating a rough tactile structure on a substrate, whereby the tactile structure is **characterized by**
- including upwardly-projecting elements with their longest dimension L being larger than the applied thickness of the binder on the substrate and
- having a surface roughness with a relief structure over 12 microns in height (as defined in the experimental part).

2. The coating composition according to claim 1, wherein the radiation-curable binder is UV, EB or LED curable.

3. The coating composition according to claim 1 or 2, wherein the high aspect ratio flakes have a longest face dimension of from 25 to 400 microns.

4. The coating composition according to claims 1-3, wherein the aspect ratio of the high aspect ratio flakes is from 2 to 15.

5. The coating composition according to claims 1-4, wherein the viscosity of the composition is from 200 to 5000 cps measured with a Brookfield Viscometer model LV.

6. The coating composition according to claims 1-5, wherein the radiation-curable binder comprises an acrylate oligomer, an acrylate monomer, and, optionally, at least one additive in the form of a wetting agent, defoamer, slip agent, stabilizer, dispersant, optical brightener or dye.

7. The coating composition according to claims 1-6, wherein the high aspect ratio flakes comprise between 5 and 50 weight percent of the coating composition.

8. The coating composition according to claim 7, wherein the high aspect ratio flakes comprise between 15 and 30 weight percent of the coating composition.

9. The coating composition according to claims 1-8, wherein the high aspect ratio flakes are of polymeric film.

10. The coating composition according to claims 1-9, wherein the high aspect ratio flakes have a face shape selected from square, rectangle, hexagon, circle, diamond and star.

11. The coating composition according to claims 1-10, further comprising at least one machine-readable feature substance.

12. A method for applying the coating composition in accordance to claims 1-11 to a substrate, comprising the steps of:
a. preparing a radiation-curable binder composition;
b. adding a plurality flakes with an aspect ratio (L/T) of 2 to 31 to the binder composition to form a coating composition;
c. applying the coating composition through a flexo or gravure application process having a metering step;
d. transferring the coating composition onto the substrate whereby the coated flakes extend upwardly and outwardly of a top layer surface of the binder composition between the flakes; and
e. curing the coating composition on the substrate whereby the flakes remain oriented upwardly and outwardly to form a tactile surface to the binder.

13. The method of claim 12, wherein the metering step includes passing the coating composition past a doctor blade.

14. A rough tactile structure on a substrate, obtainable by curing a coating composition in accordance with claims 1-11 on the surface of a substrate.

15. A rough tactile structure on a substrate, obtainable by the method of claim 12 or 13.

## Patentansprüche

1. Eine Beschichtungszusammensetzung umfassend
- eine Vielzahl an Partikeln mit hohem Seitenverhältnis mit einem Seitenverhältnis (aspect ratio, L/T) von 2 bis 31 und
- ein strahlungsvernetzbares Bindemittel,
das für die Herstellung einer rauen taktilen Struktur auf einem Substrat geeignet ist, wobei die taktile Struktur dadurch charakterisiert ist,
- dass sie aufwärtsgerichtete Elemente mit einer längsten Dimension L beinhaltet, die größer ist als die auf dem Substrat aufgetragene Dicke des Bindemittels und
- eine Oberflächenrauheit mit einer Reliefstruktur von mehr als 12 µm in der Höhe hat (wie im Experimentalteil definiert).

2. Die Beschichtungszusammensetzung gemäß Anspruch 1, wobei das strahlungsvernetzbare Bindemittel mittels UV, EB, LED vernetzbar ist.

3. Die Beschichtungszusammensetzung gemäß Anspruch 1 oder 2, wobei die Partikel mit hohem Seitenverhältnis eine längste Oberflächendimension von 25 bis 400 µm aufweisen.

4. Die Beschichtungszusammensetzung gemäß den Ansprüchen 1-3, wobei das Seitenverhältnis der Partikel mit hohem Seitenverhältnis 2 bis 15 beträgt.

5. Die Beschichtungszusammensetzung gemäß den Ansprüchen 1-4, wobei die Viskosität der Zusammensetzung 200 bis 5000 cps beträgt, gemessen mit einem Brookfield Viskosimeter Modell LV,

6. Die Beschichtungszusammensetzung gemäß den Ansprüchen 1-5, wobei das strahlungsvernetzbare Bindemittel ein Acrylat-Oligomer, ein Acrylat-Monomer und optional, mindestens ein Additiv in Form eines Benetzungsmittels, eines Entschäumers, eines Gleitmittels, eines Stabilisators, eines Dispergiermittels, eines optischen Aufhellers oder eines Färbemittels umfasst.

7. Die Beschichtungszusammensetzung gemäß den Ansprüchen 1-6, wobei die Partikel mit hohem Seitenverhältnis zwischen 5 und 50 Gewichtsprozent der Beschichtungszusammensetzung ausmachen.

8. Die Beschichtungszusammensetzung gemäß Anspruch 7, wobei die Partikel mit hohem Seitenverhältnis zwischen 15 und 30 Gewichtsprozent der Beschichtungszusammensetzung ausmachen.

9. Die Beschichtungszusammensetzung gemäß den Ansprüchen 1-8, wobei die Partikel mit hohem Seitenverhältnis aus einem Polymerfilm bestehen.

10. Die Beschichtungszusammensetzung gemäß den Ansprüchen 1-9, wobei die Partikel mit hohem Seitenverhältnis eine Oberflächenform haben, die aus einem Quadrat, einem Rechteck, einem Hexagon, einem Kreis, einer Raute und einem Stern ausgewählt ist.

11. Die Beschichtungszusammensetzung gemäß den Ansprüchen 1-10, ferner umfassend mindestens eine maschinenlesbare Substanz.

12. Eine Methode zur Auftragung der Beschichtungszusammensetzung gemäß den Ansprüchen 1-11 auf einem Substrat, umfassend die Schritte
a) Herstellen einer strahlungsvernetzbaren Bindemittelzusammensetzung;
b) Zugabe von Partikeln mit einem Seitenverhältnis (L/T) von 2 bis 31 zu der Bindemittelzusammensetzung, um eine Beschichtungszusammensetzung zu erhalten;
c) Auftragen der Beschichtungszusammensetzung durch Flexodruck oder Tiefdruck, mit einem Dosierungsschritt;
d) Transfer der Beschichtungszusammensetzung auf ein Substrat, wobei die Partikel aufwärtsgerichtet und aus einer Schichtoberseite einer Bindemittelzusammensetzung zwischen den Partikeln herausragen; und
e) Vernetzen der Beschichtungszusammensetzung auf dem Substrat, wobei die beschichteten Partikel aufwärtsgerichtet und nach außen gerichtet verbleiben, um eine taktile Oberfläche auf dem Bindemittel auszubilden.

13. Die Methode gemäß Anspruch 12, wobei der Dosierungsschritt das Vorüberziehen der Beschichtungszusammensetzung an einer Rakel beinhaltet.

14. Eine raue taktile Struktur auf einem Substrat, erhältlich durch Aushärten einer Beschichtungszusammensetzung gemäß den Ansprüchen 1-11 auf der Oberfläche eines Substrates.

15. Eine raue taktile Struktur auf einem Substrat, erhältlich durch ein Verfahren gemäß Anspruch 12 oder 13.

## Revendications

1. Composition de revêtement comprenant
- une pluralité de paillettes à rapport d'aspect élevé avec un rapport d'aspect (L/T) de 2 à 31, et
- un liant durcissable par rayonnement adapté pour créer une structure tactile rugueuse sur un substrat, de telle sorte que la structure tactile est **caractérisée en ce qu'**elle
- comprend des éléments faisant saillie vers le haut dont la plus grande dimension L est supérieure à l'épaisseur appliquée du liant sur le substrat, et
- présente une rugosité de surface avec une structure en relief de plus de 12 microns de hauteur (telle que définie dans la partie expérimentale).

2. Composition de revêtement selon la revendication 1, dans laquelle le liant durcissable par rayonnement est durcissable par UV, EB ou DEL.

3. Composition de revêtement selon la revendication 1 ou 2, dans laquelle les paillettes à rapport d'aspect élevé ont une dimension de face la plus longue de 25 à 400 microns.

4. Composition de revêtement selon les revendications 1 à 3, dans laquelle le rapport d'aspect des paillettes à rapport d'aspect élevé est de 2 à 15.

5. Composition de revêtement selon les revendications 1 à 4, dans laquelle la viscosité de la composition est de 200 à 5 000 cps, mesurée avec un viscosimètre Brookfield modèle LV.

6. Composition d'expédition selon les revendications 1 à 5, dans laquelle le liant durcissable par rayonnement comprend un oligomère d'acrylate, un monomère d'acrylate et, facultativement, au moins un additif sous la forme d'un agent mouillant, d'un agent antimousse, d'un agent de glissement, d'un stabilisant, d'un dispersant, d'un azurant optique ou d'un colorant.

7. Composition de revêtement selon les revendications 1 à 6, dans laquelle les paillettes à rapport d'aspect élevé constituent entre 5 et 50 pour cent en poids de la composition de revêtement.

8. Composition de revêtement selon les revendications 1 à 7, dans laquelle les paillettes à rapport d'aspect élevé constituent entre 15 et 30 pour cent en poids de la composition de revêtement.

9. Composition de revêtement selon les revendications 1 à 8, dans laquelle les paillettes à rapport d'aspect élevé sont en un film polymère.

10. Composition de revêtement selon les revendications 1 à 9, dans laquelle les paillettes à rapport d'aspect élevé ont une forme de face choisie parmi un carré, un rectangle, un hexagone, un cercle, un diamant et une étoile.

11. Composition de revêtement selon les revendications 1 à 10, comprenant en outre au moins une substance caractéristique pouvant être lue par machine.

12. Procédé pour appliquer la composition de revêtement selon les revendications 1 à 11 à un substrat, comprenant les étapes consistant à :
a. préparer une composition de liant durcissable par rayonnement ;
b. ajouter une pluralité de paillettes avec un rapport d'aspect (L/T) de 2 à 31 à la composition de liant pour former une composition de revêtement ;
c. appliquer la composition de revêtement par un procédé d'application de type flexo ou de gravure comportant une étape de dosage ;
d. transférer la composition de revêtement jusque sur le substrat de telle sorte que les paillettes appliquées en revêtement s'étendent vers le haut et vers l'extérieur d'une surface de couche supérieure de la composition de liant entre les paillettes ; et
e. durcir la composition de revêtement sur le substrat, de telle sorte que les paillettes restent orientées vers le haut et vers l'extérieur pour former une surface tactile avec le liant.

13. Procédé selon la revendication 1.2, dans lequel l'étape de dosage comprend le passage de la composition de revêtement au-delà d'une racle.

14. Structure tactile rugueuse sur un substrat ; pouvant être obtenue par durcissement d'une composition de revêtement selon les revendications 1 à 11 sur la surface d'un substrat.

15. Structure tactile rugueuse sur un substrat, pouvant être obtenue par le procédé de la revendication 12 ou 13.
